Europäisches Patentamt

European Patent Office

Office européen des brevets

(11) Veröffentlichungsnummer: **0 378 720**

**A1**

(12) **EUROPÄISCHE PATENTANMELDUNG**

(21) Anmeldenummer: 89100803.9

(51) Int. Cl.⁵: **H01G 1/11**

(22) Anmeldetag: 18.01.89

(43) Veröffentlichungstag der Anmeldung:
25.07.90 Patentblatt 90/30

(84) Benannte Vertragsstaaten:
**DE FR IT SE**

(71) Anmelder: **Siemens Aktiengesellschaft**
**Wittelsbacherplatz 2**
**D-8000 München 2(DE)**

(72) Erfinder: **Utner, Ferdinand**
**Roter Brachweg 99**
**D-8400 Regensburg(DE)**
Erfinder: **Hieber, Udo**
**Knupfertal 94**
**D-7920 Heidenheim 5(DE)**

(54) **Elektrischer Wickelkondensator.**

(57) Ein elektrischer Wickelkondensator (1) ist in ein Gehäuse (2) mit einer Überdruck-Abreißsicherung eingebaut. Die Abreißsicherung besteht aus einem zumindest teilweise in einem Kernrohr (5) angeordneten elektrischen Stromleiter (12) mit einer Sollabreißstelle. Der Stromleiter (12) ist an einem nach innen gewölbten Boden (3) unter Zwischenschaltung eines isolierenden Teiles befestigt. Zur Befestigung des Stromleiters (12) ist ein fest mit dem Boden verbundenes Teil (8) und ein mit dem Stromleiter (12) verbundenes Teil (10) durch Einrasten miteinander verbunden. Das fest mit dem Boden (3) verbundene Teil (8) ist ohne Öffnung im Boden (3) montiert.

FIG1

EP 0 378 720 A1

## Elektrischer Wickelkondensator

Die Erfindung betrifft einen elektrischen Wickelkondensatore, insbesondere Leistungskondensator, der in ein Gehäuse mit einer Überdruck-Abreißsicherung eingebaut ist, die aus einem zumindest teilweise in einem Kernrohr angeordneten elektrischen Stromleiter mit einer Sollabreißstelle besteht und bei dem der Stromleiter an einem nach innen gewölbten Boden unter Zwischenschaltung eines isolierenden Teils befestigt ist.

Ein derartiger Kondensator ist aus der DE 28 25 377 C2 bekannt.

Die Überdruck-Abreißsicherung dient dazu, die Stromzuführung zum Wickelpaket zu unterbrechen, wenn im Kondensator ein bestimmter Überdruck (z.B. 2 bar) erreicht ist. Dieser Überdruck kann beispielsweise bei zu großer Wärmeentwicklung im Kondensatorwickel bzw. bei der Entstehung gasförmiger Zersetzungsprodukte durch Selbstheilprozesse bei mit Öl imprägnierten Kondensatoren entstehen.

Bei der bekannten Abreißsicherung ist im Zuleitungsbereich zwischen Deckel-Durchführung und Wickelkontaktierung eine Querschnittsverengung (Sollabreißstelle) vorgesehen. Dieses querschnittsverengte Leitungsteil, z.B. ein eingesägter rohrförmiger elektrischer Leiter aus Kupfer, wird über ein Isolierstück am nach innen gewölbten Boden verankert, so daß bei innerem Überdruck und der dadurch hervorgerufenen Bodenverformung die Querschnittsverengung reißt, wodurch der Stromfluß unterbrochen wird.

Zur Verankerung des querschnittsverengten Stromleiters ist dieser über ein Isolierteil mit Spannbändern im Boden befestigt. Die Spannbänder (Metallbänder) werden dabei durch eine Öffnung im Boden und eine Scheibe gesteckt, mehrfach gefaltet und danach der ganze Bereich dicht gelötet.

Dieser Arbeitsablauf ist nicht nur aufwendig, sondern führt auch immer wieder zu undichten Stellen sowie zum Eindringen von Löttropfen in das Kondensatorinnere, wodurch elektrische Ausfälle (z.B. Kurzschlüsse) hervorgerufen werden können. Außerdem setzt diese Technik lötbare, d.h. verzinnte Oberflächen des Bodens voraus, so daß bei an und für sich nicht lötbaren Materialien wie z.B. Stahl teure partielle Verzinnungen im Lötbereich vorgesehen werden müssen.

Aufgabe der Erfindung ist es daher, den eingangs genannten Kondensator derart weiterzubilden, daß die aufgezeigten Schwierigkeiten behoben werden und daß weiterhin das Sicherungssystem in einfacher Weise montiert werden kann.

Diese Aufgabe wird erfindungsgemäß dadurch gelöst, daß zur Befestigung des Stromleiters ein fest mit dem Boden verbundenes Teil und ein mit dem Stromleiter verbundenes Teil durch Einrasten miteinander verbunden sind und daß das mit dem Boden verbundene Teil ohne Öffnung im Boden montiert ist.

Zweckmäßige Ausgestaltungen des Gegenstandes der Erfindung sind in den Unteransprüchen angeführt.

Die Vorteile des Anmeldungsgegenstandes sind in den folgenden Ausführungsbeispielen erläutert.

In der dazugehörenden Zeichnung zeigen

FIG 1 ein Ausführungsbeispiel mit einem Kunststoffbolzen und einer Einrastfeder,

FIG 2 bis 4 Einzelheiten der Einrastfeder,

FIG 5 ein Schnittbild gemäß FIG 1,

FIG 6 ein weiteres Ausführungsbeispiel eines Kunststoffbolzens,

FIG 7 ein Ausführungsbeispiel eines Metallbolzens und einer Einrastfeder,

FIG 8 einen Schnitt gemäß FIG 7,

FIG 9 ein weiteres Ausführungsbeispiel mit Metallbolzen und Einrastfeder,

FIG 10 ein Schnittbild gemäß FIG 9,

FIG 11 ein Ausführungsbeispiel mit Einraststreifen und Einrastfeder,

FIG 12 ein Schnittbild gemäß FIG 11,

FIG 13 eine Einzelheit des Einraststreifens,

FIG 14 ein Ausführungsbeispiel mit Buchse,

FIG 15 ein Schnittbild gemäß FIG 14,

FIG 16 ein weiteres Ausführungsbeispiel mit Buchse,

FIG 17 ein Schnittbild gemäß FIG 16,

FIG 18 ein Ausführungsbeispiel mit am Stromleiter montierter Einrastfeder,

FIG 19 ein Schnittbild gemäß FIG 18,

FIG 20 eine weitere Ausführungsform einer Einrastfeder,

FIG 21 eine zweite Ausführungsform mit am Stromleiter befestigter Einrastfeder,

FIG 22 eine dritte Ausführungsform mit am Stromleiter befestigter Einrastfeder,

FIG 23 u. 24 eine Teildarstellung gemäß FIG 22,

FIG 25 eine Ausführungsform mit Bolzen mit Federelementen,

FIG 26 ein Schnittbild gemäß FIG 25,

FIG 27 bis 29 Ausführungsformen, bei denen das am Boden befestigte Teil durch Verformung des Bodens montiert ist,

FIG 30 einen Teilausschnitt gemäß FIG 29,

FIG 31 u. 32 Verspannmöglichkeiten der Abreißsicherung,

FIG 33 u. 34 Einzelheiten gemäß FIG 1.

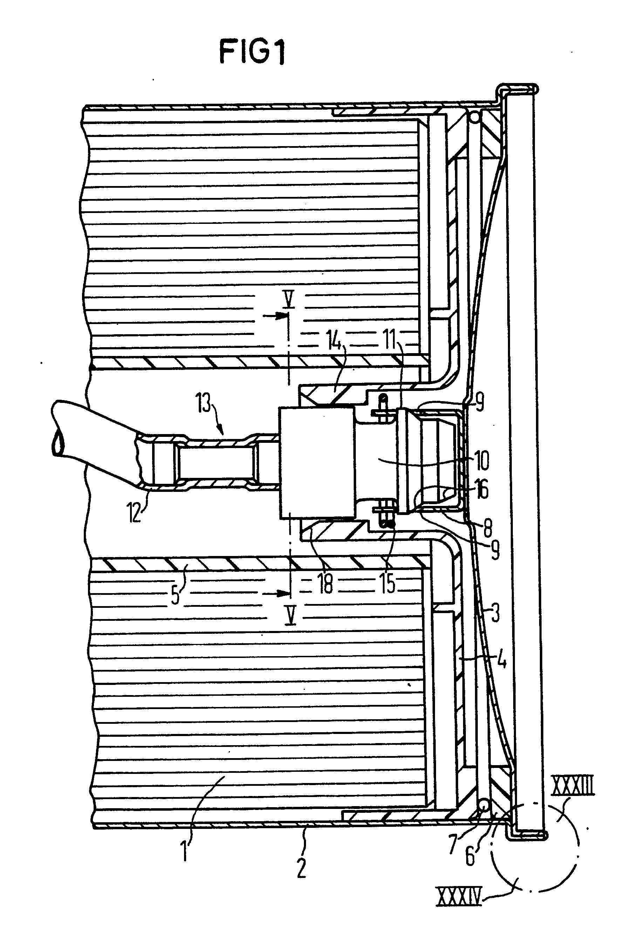

In der FIG 1 ist ein Kondensatorwickel 1 dargestellt, der in ein Gehäuse 2, z.B. aus Edelstahl, eingebaut ist. Das Gehäuse 2 ist mit einem Boden 3 verschlossen, der ebenfalls aus Edelstahl bestehen kann. Zur Isolierung des Kondensatorwickels 1 gegen das Gehäuse 2 und den metallischen Boden 3 ist eine Isolierkappe 4 vorgesehen, die teilweise in das Kernrohr 5 des Kondensatorwickels 1 hineinreicht. Zur schüttelsicheren Befestigung ist zwischen Boden 3 und Isolierkappe 4 ein Isolierring 6 und eine Ringfeder 7 angeordnet. Am Boden 3 ist eine Einrastfeder 8 z.B. durch Verschweißung befestigt. Die Einrastfeder 8 ist beispielsweise zwei- oder vierblättrig ausgeführt und besitzt Aussparungen 9, in denen die Schulter 11 eines Bolzens 10 einrastet. Der Bolzen 10 besteht aus einem isolierendem Kunststoff und ist mit dem Stromleiter 12, der beispielsweise aus einem kupfernen Leitungsrohr mit einer in der FIG 1 nicht dargestellten Sollabreißstelle besteht, durch eine Quetschung 13 verbunden.

Zur Montage wird das Gehäuse 2 mit eingeschweißtem Boden 3 und Einrastfeder 8 über das montierte Paket des bzw. der Kondensatorwickel 1 mit vorstehendem Bolzen 10 geschoben, bis der Bolzen 10 in die Einrastfeder 11 einschnappt.

Um ein Verbiegen der z.B. zwei- oder vierblättrigen Einrastfeder 8 beim Einführen des Bolzens 10 und ggf. bei einer nachträglichen Schüttelbeanspruchung (Schwingfestigkeit) zu vermeiden, sind entweder Führungselemente 14 in der Isolierkappe 4 oder am Bolzen 10 vorteilhaft. Weiterhin ist es für diesen Zweck vorteilhaft, eine Sicherungsfeder 15 an der Einrastfeder 8 anzuordnen. Die Sicherungsfeder 15 besteht zweckmäßigerweise aus Federdraht und besitzt mehr als 1,25 Windungen.

Die Sicherungsfeder 15 hat ferner den Vorteil, daß die Einrastfeder 8 aus Edelstahlblech gefertigt werden kann, da durch den Schweißvorgang beim Verbinden der Einrastfeder 8 mit dem Boden 3 sich bei Federblechen aus kostengünstigeren Materialien die Federeigenschaften stark verschlechtern.

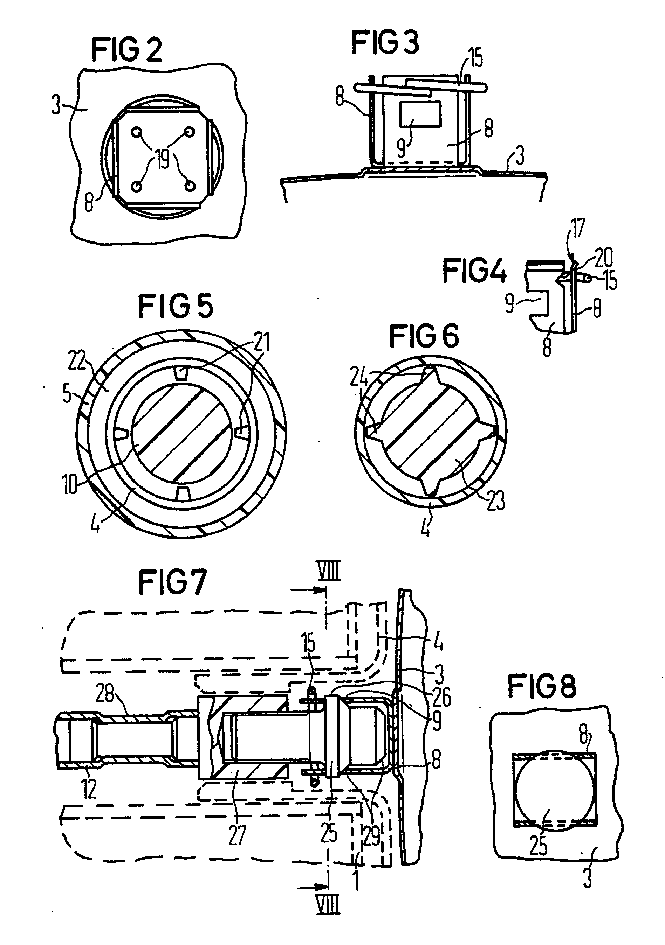

Eine weitere Verbesserung der Einführung des Bolzens 10 in die Einrastfeder 8 kann erreicht werden, wenn zusätzlich zu den am Bolzen 10 vorgesehenen Einführungsschrägen 16 Einführungsschrägen 17 an der Einrastfeder 8 vorgesehen werden, wie es in FIG 4 dargestellt ist.

Weiterhin können zusätzliche Einführungsschrägen 18 an der Iso lierkappe 4 angeordnet sein.

Der Bolzen 10 ist wie bereits erwähnt aus Kunststoff gefertigt, z.B. aus Hartgewebe gedreht oder aus Kunststoff gespritzt bzw. gepreßt.

In der FIG 2 ist eine vierblättrige Einrastfeder 8 dargestellt, die am Boden 3 durch vier Punktschweißungen 19 befestigt ist.

Die FIG 3 zeigt die Seitenansicht einer am Boden 3 angeorndeten Einrastfeder 8 mit Aussparung 9 und Sicherungsfeder 15.

In FIG 4 ist ein Teilausschnitt aus FIG 3 mit einer Einrastfeder 8 und Aussparung 9 dargestellt. Die Einrastfeder 8 weist, wie bereits bei FIG 1 erwähnt, eine Einführungsschräge 17 auf und besitzt eine weitere Aussparung 20 zur Führung der Sicherungsfeder 15.

FIG 5 zeigt ein Schnittbild nach FIG 1 aus dem zu erkennen ist, daß an der Isolierkappe 4 Führungsrippen 21 angeordnet sind, um das Einführen des Bolzens 10 zu erleichtern. Es ist zweckmäßig, zwischen Isolierkappe 4 und Kernrohr 5 einen Abstand 22 vorzusehen, der ggf. Verdrahtungen der Kondensatorwickel bei Aufbau eines Kondensators aus mehreren Teilwickeln aufnehmen kann.

In FIG 6 ist das Ausführungsbeispiel eines weiteren Bolzens 23 dargestellt, der Führungsrippen 24 aufweist, um das Einführen in die Isolierkappe 4 zu erleichtern.

In der FIG 7 ist ein Ausführungsbeispiel dargestellt, bei dem ein Bolzen 25 aus Metall mit der Schulter 26 in die Aussparung 9 der Einrastfeder 8 einschnappt. Um Kurzschlüsse zwischen dem Stromleiter 12 und dem metallischen Boden 3 zu vermeiden, ist der Metallbolzen 25 über ein Isolierzwischenstück 27 mittels der Quetschstelle 28 mit dem Stromleiter 12 verbunden. Der Bolzen 25 besitzt zur leichteren Einführung Einführungsschrägen 29. Im übrigen sind in der FIG 7 für gleiche Teile die gleichen Bezugzeichen wie in den vorhergehenden Figuren gewählt.

Die FIG 8 stellt einen Schnitt gemäß FIG 7 dar, aus dem zu erkennen ist, daß die zweiblättrige Einrastfeder 8, die mit dem Boden 3 verschweißt ist, eine Schnappverbindung mit dem Metallbolzen 25 bildet.

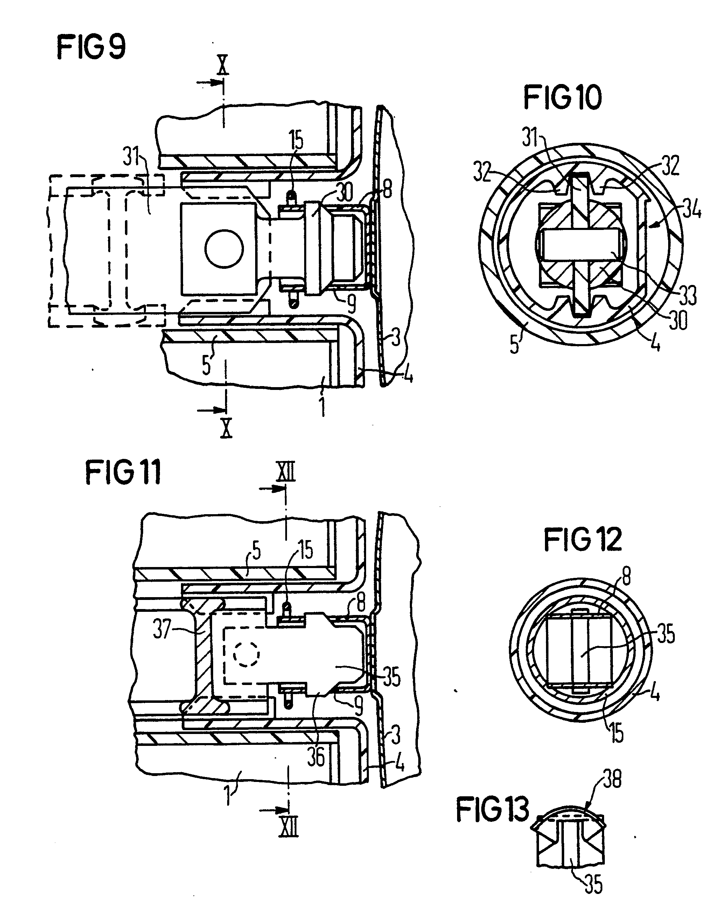

In der FIG 9 ist ein Ausführungsbeispiel dargestellt, bei dem ein Bolzen 30 aus Metall in die Aussparungen 9 der Einrastfeder 8 einschnappt. Zur Isolierung und zur Zugkraftübertragung auf den Stromleiter dient bei diesem Ausführungsbeispiel ein gestanzter bzw. stranggepreßter Kunststoffstreifen 31 (Hartgewebe bzw. Thermoplast).

FIG 10 stellt ein Schnittbild gemäß FIG 9 dar. Daraus ist zu erkennen, daß in der Isolierkappe 4 Führungsrippen 32 zur Führung des Kunststoffstreifens 31 angeordnet sind. Der Bolzen 30 besitzt eine Verstiftung 33 zur Befestigung des Kunststoffstreifens 31. Zwischen Isolierkappe 4 und Kernrohr 5 ist ein Zwischenraum 34 zur Aufnahme der Wickel-Verdrahtung vorgesehen.

In der FIG 11 ist eine Ausführungsform dargestellt, bei der der Bolzen durch einen Isolierstreifen 35 (bzw. -platte) ersetzt ist. Am Ende des Isolierstreifen 35 ist eine der Bolzenform entsprechende Konfiguration mit Schulter 36 angeschnitten bzw. angespritzt. Der Isolierstreifen 35 kann entweder gestanzt sein oder durch ein Strangpreßverfahren hergestellt werden. Bei Herstellung mittels eines Strangpreßverfahrens besitzt der Isolierstreifen 35 vorzugsweise ein Doppel-T-Profil 37.

In der FIG 12 ist das in FIG 11 bezeichnete Schnittbild dargestellt. Der Isolierstreifen 35 rastet in die zweiblättrige Einrastfeder 8 ein, die durch die Sicherungsfeder 15 abgesichert ist.

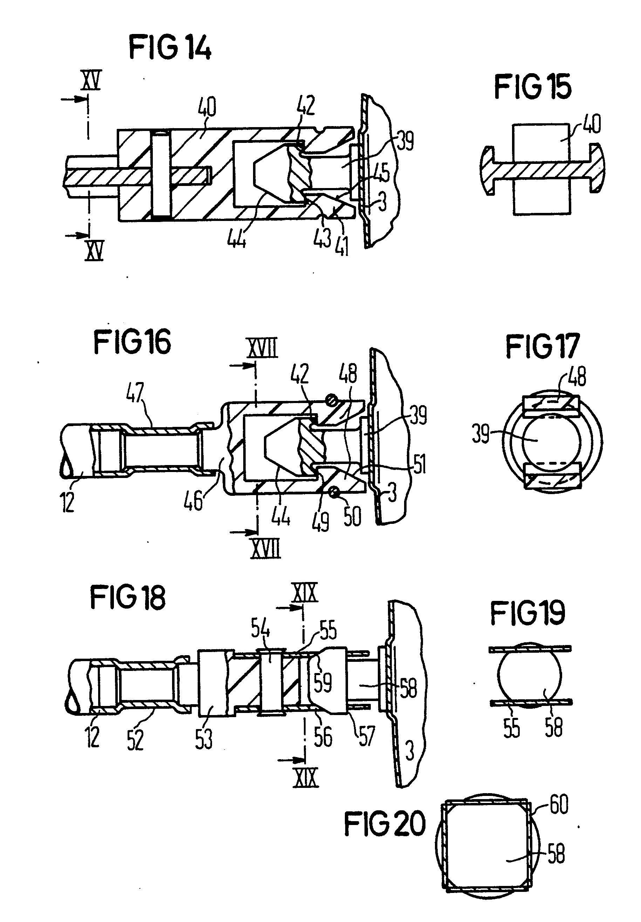

In der FIG 13 ist dargestellt, daß der Isolierstreifen 35 eine Einführungsschräge 38 besitzt, die dem leichteren Einführen in die Einrastfeder 8 dient.

In der FIG 14 ist ein Ausführungsbeispiel dargestellt, bei dem ein Bolzen 39 aus Metall mit dem Boden 3 verschweißt ist. Mit dem Stromleiter ist eine Buchse 40 aus isolierendem Material verbunden, die an ihren Enden Federelemente 41 besitzt. Die Schulter 42 des Bolzens 39 bildet mit der Schulter 43 der Federelemente 41 eine Einrastverbindung. Zur Erleichterung der Einführung sind am Bolzen 39 und an den Federelementen 41 Einführungsschrägen 44 bzw. 45 vorgesehen.

FIG 15 stellt ein Schnittbild nach FIG 14 dar, aus der das Profil der Buchse 40 ersichtlich ist.

In der FIG 16 ist ein weiteres Ausführungsbeispiel einer Buchse 46 aus isolierendem Material dargestellt, die mit dem Stromleiter 12 durch die Quetschstelle 47 verbunden ist. Die Buchse 46 besitzt an ihren Enden federnde Elemente 48, die mit der Schulter 49 eine Einrastverbindung mit der Schulter 42 des Metallbolzens 39 bilden, der mit dem Boden 3 verschweißt ist. Zur zusätzlichen Unterstützung der Schnappverbindung ist eine Sicherungsringfeder 50 vorgesehen. Die Enden der federnden Elemente 48 besitzen weiterhin Einführungsschrägen 51.

In der FIG 17 ist ein Schnittbild nach FIG 16 dargestellt.

In der FIG 18 ist ein weiteres Ausführungsbeispiel einer Einrastverbindung dargestellt, bei der auf dem Stromleiter 12 durch die Quetschstelle 52 ein Isolierzwischenstück 53 befestigt ist, an dem mittels eines Niets 54 eine Einrastfeder 55 befestigt ist. Die Einrastfeder 55 weist Aussparungen 56 auf, in die die Schulter 57 eines mit dem Boden 3 verschweißten Bolzens 58 aus Metall einrastet. Zur besseren Einführung besitzt der Bolzen 58 Einführungsschrägen 59.

FIG 19 zeigt ein Schnittbild nach FIG 18, aus dem ersichtlich ist, daß eine zweiblättrige Einrastfeder 55 mit dem Bolzen 58 die Einrastverbindung bildet.

In der FIG 20 ist ein weiteres Ausführungsbeispiel dargestellt, bei dem die Einrastverbindung zwischen einer vierblättrigen Einrastfeder 60 und dem Bolzen 58 erfolgt.

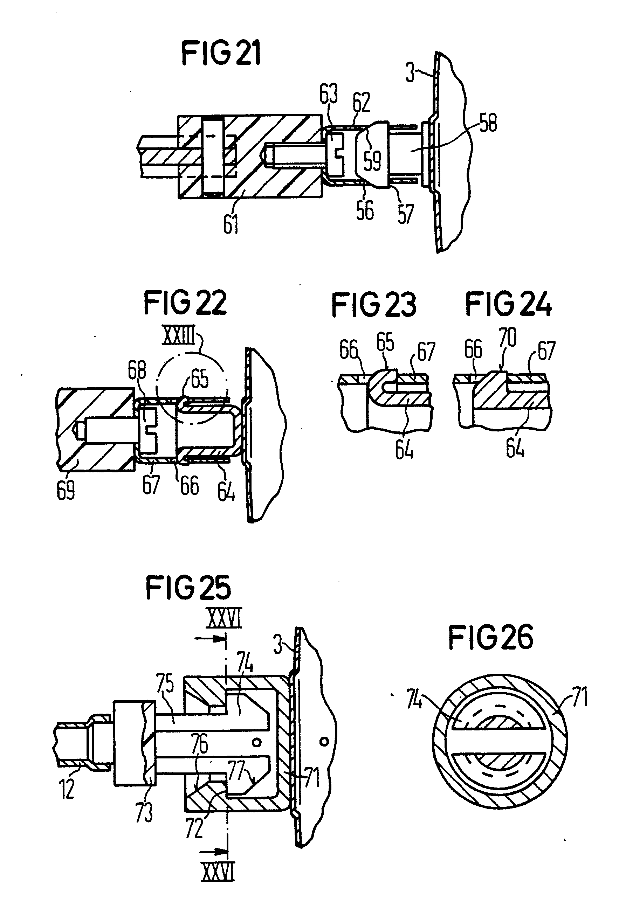

In der FIG 21 ist ein Ausführungsbeispiel dargestellt, bei dem eine Einrastfeder 62 mittels einer Schraube 63 an dem Isolierzwischenstück 61 befestigt ist.

In der FIG 22 ist eine Form einer Einrastverbindung dargestellt, bei der am Boden 3 eine Buchse 64 bzw. ein rohrförmiges Metallstück mit umgebördeltem Rand 65 durch eine Punktschweißung montiert ist. Die Umbördelung 65 greift in die Aussparung 66 einer Einrastfeder 67, die mit einer Schraube 68 an einem Isolierbolzen 69 als Zwischenstück zum Stromleiter befestigt ist.

Die FIG 23 zeigt einen vergrößerten Teil aus FIG 22.

In der FIG 24 ist eine weitere Ausführungsform der Buchse 64 dargestellt, die eine gedrehte Schulter 70 aufweist, die in die Aussparung 66 der Einrastfeder 67 eingreift.

FIG 25 zeigt die Ausführungsform einer Einrastverbindung, bei der auf dem Boden 3 eine Buchse 71 bzw. ein Rohrstück mit Einrastnase 72 aufgeschweißt ist. Mit dem Stromleiter 12 ist über eine Zwischenisolierung 73 ein Bolzen 75 mit Federelementen 74 verbunden. Der Bolzen 75 kann aus Metall oder Kunststoff bestehen, wobei bei der Kunststoffausführung die Zwischenisolierung 73 entfallen kann. An der Buchse 71 sowie an den Federelementen 74 sind Einführungsschrägen 76 bzw. 77 angeordnet.

In der FIG 26 ist ein Schnitt gemäß FIG 25 dargestellt.

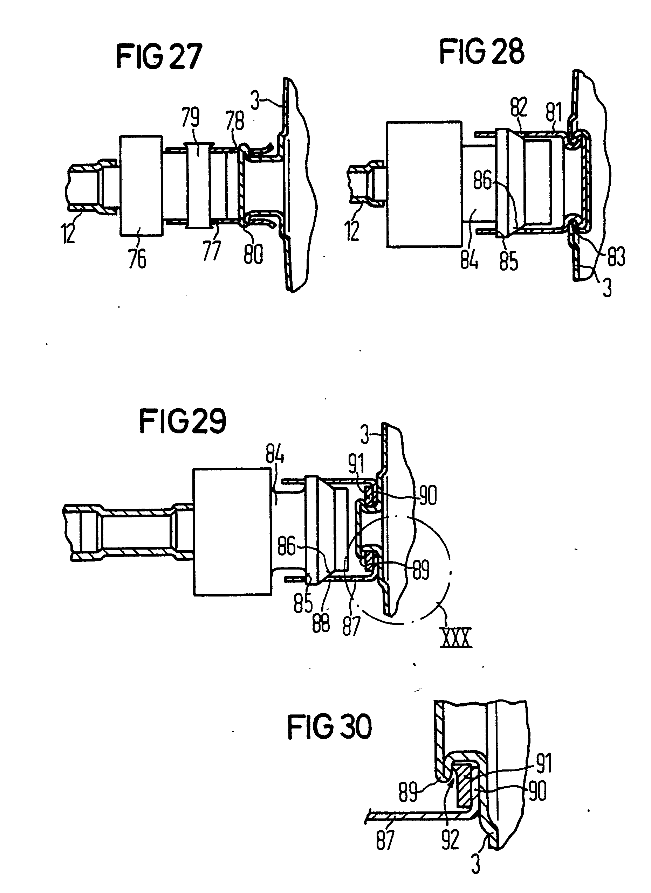

In der FIG 27 ist eine Ausführungsform dargestellt, bei der am Stromleiter 12 über ein Isolierzwischenstück 76 eine Einrastfeder 77 mit Aussparung 78 angeordnet ist. Die Einrastfeder 77 ist mit dem Isolierstück 76 durch einen Niet 79 verbunden. Das Gegenstück zur Einrastverbindung wird dadurch gebildet, daß durch Verformung des Bodens 3 ein Nietkopf 80 gebildet wird.

In der FIG 28 ist eine Ausführungsform dargestellt, bei der eine Einrastfeder 81 mit Aussparungen 82 durch eine Nietverformung 83 des Bodens 3 gehaltert ist. Diese Ausführungsform ist besonders vorteilhaft, da hierbei eine Einrastfeder 81 aus normalem Federblech verwendet werden kann. Bei den vorstehend beschriebenen Ausführungsbeispielen war die Verwendung von Einschnappfedern aus normalem Federblech nicht möglich, da durch den Schweißvorgang die Federeigenschaften weitgehend verloren gehen. Als Gegenstück zur Einrastfeder 81 dient ein Kunststoffbolzen 84 mit Einrastschulter 85 und Einführungsschrägen 86, der mit dem Stromleiter 12 verbunden ist.

In der FIG 29 ist ein weiteres Ausführungsbeispiel dargestellt, bei dem eine Einrastfeder 87 mit Aussparungen 88 durch eine Verformung des Bodens 3 gehaltert ist. Der Boden 3 wird dabei in Form eines Nietkopfes 89 gezogen, so daß die Enden 90 der Einrastfeder 87 mittels einer Beilagscheibe 91 montiert werden.

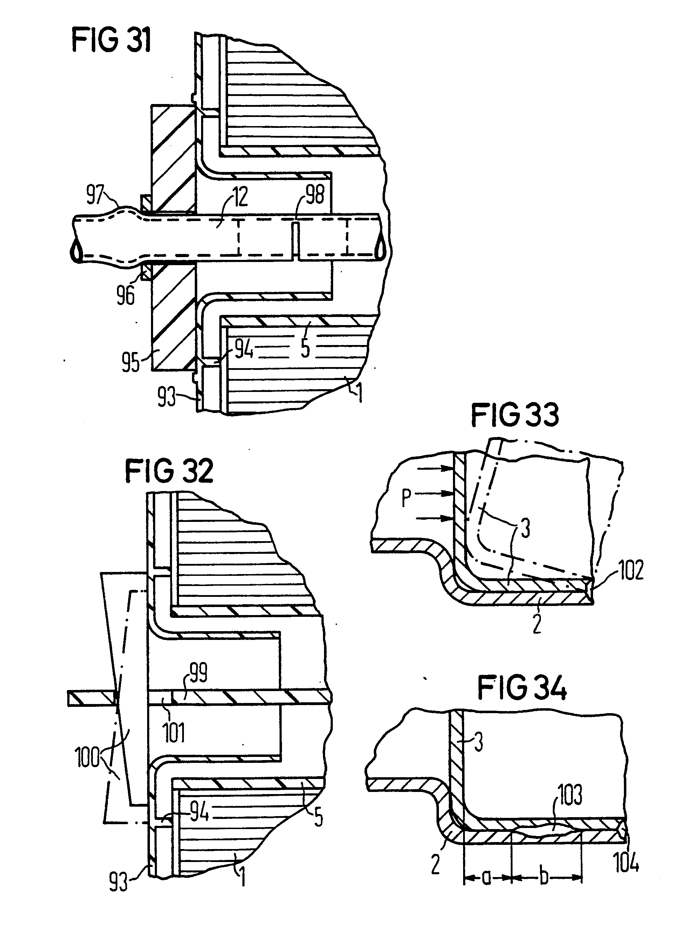

FIG 30 zeigt eine Teilvergrößerung der FIG 29, aus der der aus dem Boden 3 gebildete Nietkopf 89 besser ersichtlich ist. Die Beilagscheibe 91 zur Festlegung der Enden 90 der Einrastfeder 87 weist eine Schulter 92 auf, die am Innendurchmesser des aus dem Boden 3 gezogenen Rohrniets 89 anliegt.

In FIG 31 ist die Möglichkeit einer Verspannung der Abreißsicherung im Gehäuse dargestellt. Nachdem das Gehäuse mit eingeschweißtem Boden über das montierte Wickelpaket geschoben wurde, so daß die in den vorstehenden Ausführungsbeispielen beschriebene Einrastverbindung hergestellt wurde, wird am entgegengesetzten Ende des Kondensatorwickels 1 eine weitere Isolierkappe 93 in das Kernrohr 5 eingeführt. An der Isolierkappe 93 sind Rippen 94 angeordnet, die den Kondensatorwickel 1 festlegen. Dann wird über den Stromleiter 12 eine Isolierplatte 95 und eine Beilagscheibe 96 geschoben und nach einem Toleranzausgleich durch Anziehen der Stromleiter 12 durch die Quetschstelle 97 festgelegt. Im Stromleiter 12 ist die Sollabreißstelle 98 angeordnet, die durch eine Querschnittsverengung des Leiters 12 gebildet wird.

Eine weitere Möglichkeit des Abfangens der Zugkraft bei Bodenverformung durch Innendruck ist in der FIG 32 dargestellt. Hierbei wird die Abreißsicherung mittels eines Isolier- bzw. Spannstreifens 99 gehaltert, der gestanzt oder stranggepreßt ist und ggf. eine aufmontierte Sicherung und Wickelverdrahtung aufweist. Die Festlegung des Streifens 99 erfolgt durch einen oder zwei Keile 100, die durch eine Aussparung 101 des Streifens 99 geführt werden und die Zugkräfte über die Isolierkappe 93 abfangen.

In den FIG 33 und 34 ist eine Einzelheit der FIG 1 dargestellt.

Aus der FIG 33 ist ersichtlich, daß bei nur einer Verschweißung 102 über die Wanddicken der Enden des Gehäuses 2 mit dem Boden 3 der Boden 3 bereits bei geringen Druckbelastungen P um die Schweißstelle 102 ausklappen kann, was in der FIG 33 strichliert dargestellt ist.

Um dies zu verhindern, muß gemäß FIG 34 der Abstand a zwischen der Schweißstelle 103 und der Gehäuseaufweitung bzw. dem Bodengrund so klein wie möglich sein. Dies wurde durch eine Rollnahtschweißung der Ausdehnung b an der Stelle 103 erreicht. Da aber mit einer derartigen Rollnahtschweißung keine absolute Dichtheit gewährleistet werden kann, müssen Gehäuse 2 und Boden 3 zusätzlich an deren Enden eine weitere Verschweißung 100, 104 erhalten, die z.B. mit Schutzgasschweißverfahren wie WIG (Wolframinertgas)- oder Laser- bzw. Elektronenstrahlschweißverfahren erhalten werden.

Den beschriebenen Ausführungsbeispielen ist zu entnehmen, daß der Gegenstand der Erfindung ein einfach montierbares Verankerungssystem für eine Überdruckabreißsicherung ermöglicht, ohne daß eine Öffnung bzw. Lötung am Boden des Gehäuses erforderlich ist.

## Ansprüche

1. Elektrischer Wickelkondensator, insbesondere Leistungskondensator, der in ein Gehäuse mit einer Überdruckabreißsicherung eingebaut ist, die aus einem zumindest teilweise in einem Kernrohr angeordneten elektrischen Stromleiter mit einer Sollabreißstelle besteht und bei dem der Stromleiter an einem nach innen gewölbten Boden unter Zwischenschaltung eines isolierenden Teiles befestigt ist, **dadurch gekennzeichnet,** daß zur Befestigung des Stromleiters (12) ein fest mit dem Boden (3) verbundenes Teil und ein mit dem Stromleiter (12) verbundenes Teil durch Einrasten miteinander verbunden sind und daß das mit dem Boden (3) verbundene Teil ohne Öffnung im Boden (3) montiert ist.

2. Elektrischer Wickelkondensator nach Anspruch 1, **dadurch gekennzeichnet,** daß die Einrastverbindung aus einem Bolzen (10, 23, 25, 30, 39, 58, 75) mit Schulter (11, 26, 42, 57) und einer Einrastfeder (8, 55, 60, 62, 67, 77, 81, 87) mit Aussparungen (9, 56, 66, 78, 82, 88) besteht und daß die Schulter (11, 26, 42, 57) des Bolzens (10, 23, 25, 30, 39, 58, 75) in die Aussparungen (9, 56, 66, 78, 82, 88) der Einrastfeder (8, 55, 62, 67, 77, 81, 87) einrastet.

3. Elektrischer Wickelkondensator nach Anspruch 2, **dadurch gekennzeichnet,** daß die Einrastfeder (8, 55, 60, 62, 67, 77, 81, 87) zwei- oder vierblättrig ausgeführt ist.

4. Elektrischer Wickelkondensator nach Anspruch 2 oder 3, **dadurch gekennzeichnet,** daß an der Einrastfeder (8, 55, 60, 62, 67, 77, 81, 87) eine Sicherungsfeder (15) angeordnet ist.

5. Elektrischer Wickelkondensator nach Anspruch 4, **dadurch gekennzeichnet,** daß die Sicherungsfeder (15) mindestens 1,25 Windungen besitzt.

6. Elektrischer Wickelkondensator nach Anspruch 2, **dadurch gekennzeichnet,** daß am Bolzen (23) Führungsrippen (24) angeordnet sind.

7. Elektrischer Wickelkondensator nach Anspruch 2 oder 6, **dadurch gekennzeichnet,** daß der Bolzen (10, 25, 39, 58, 84) Einführungsschrägen (16, 29, 44, 59, 86) besitzt.

8. Elektrischer Wickelkondensator nach zumindest einem der Ansprüche 2 bis 7, **dadurch gekennzeichnet,** daß der Bolzen (39, 58) am Boden (3) befestigt ist und daß die Einrastfedern (55, 62, 67) am Isolierzwischenstück (53, 61, 69) befestigt sind.

9. Elektrischer Wickelkondensator nach zumindest einem der Ansprüche 2 bis 7, **dadurch gekennzeichnet,** daß die Einrastfeder (8, 81, 87) am Boden (3) befestigt ist.

10. Elektrischer Wickelkondensator nach Anspruch 1, **dadurch gekennzeichnet,** daß die Einrastverbindung aus einer Buchse (40, 46, 71) mit Einrastnase (43, 49, 72) und einem Bolzen (39, 75) besteht.

11. Elektrischer Wickelkondensator nach Anspruch 10, **dadurch gekennzeichnet,** daß der Bolzen (75) Federelemente (74) aufweist.

12. Elektrischer Wickelkondensator nach Anspruch 10 oder 11, **dadurch gekennzeichnet,** daß der Bolzen (39) am Boden (3) montiert ist.

13. Elektrischer Wickelkondensator nach Anspruch 10 oder 11, **dadurch gekennzeichnet,** daß die Buchse (71) am Boden (3) montiert ist.

14. Elektrischer Wickelkondensator nach Anspruch 1, **dadurch gekennzeichnet,** daß die Einrast verbindung aus einer am Boden (3) montierten Buchse (64) mit umgebördeltem Rand (65) bzw. gedrehtem Rand (70) und einer Einrastfeder (67) mit Aussparungen (66) besteht und daß der Rand (65, 70) der Buchse (64) in die Aussparungen (66) der Einrastfeder (67) einrastet.

15. Elektrischer Wickelkondensator nach Anspruch 1, **dadurch gekennzeichnet,** daß die Einrastverbindung aus einem Isolierstreifen (35) mit Schulter (36) und einer Einrastfeder (8) mit Aussparungen (9) besteht, und daß die Schulter (36) des Streifens (35) in die Aussparungen (9) der Einrastfeder (8) einrastet.

16. Elektrischer Wickelkondensator nach Anspruch 15, **dadurch gekennzeichnet,** daß die Einrastfeder (8) am Boden (3) montiert ist.

17. Elektrischer Wickelkondensator nach Anspruch 15, **dadurch gekennzeichnet,** daß der Isolierstreifen (35) am Boden (3) montiert ist.

18. Elektrischer Wickelkondensator nach zumindest einem der Ansprüche 1 bis 17, **dadurch gekennzeichnet,** daß zwischen Kondensatorwickel (1) und Boden (3) eine Isolierkappe (4) angeordnet ist, die in das Kernrohr (5) des Kondensators (1) hineinreicht und daß an der Isolierkappe (4) Einführungsschrägen (18) und/oder Führungsrippen (21, 32) angeordnet sind.

19. Elektrischer Wickelkondensator nach zumindest einem der Ansprüche 1 bis 17, **dadurch gekennzeichnet,** daß das fest mit dem Boden verbundene Teil am Boden (3) angeschweißt ist.

20. Elektrischer Wickelkondensator nach zumindest einem der Ansprüche 1 bis 18, **dadurch gekennzeichnet,** daß das fest mit dem Boden verbundene Teil durch eine Verformung des Bodens (3) gehalten ist (FIG 27, FIG 28, FIG 29, FIG 30).

21. Elektrischer Wickelkondensator nach zumindest einem der Ansprüche 1 bis 20, **dadurch gekennzeichnet,** daß Boden (3) und Gehäuse (2) durch eine Rollnahtschweißung (103) und an den Enden durch eine zusätzliche Verschweißung (104) miteinander verbunden sind.

22. Elektrischer Wickelkondensator nach zumindest einem der Ansprüche 1 bis 21, **dadurch gekennzeichnet,** daß zur Festlegung der Abreißsicherung der Stromleiter (12) eine Quetschstelle (97) aufweist.

23. Elektrischer Wickelkondensator nach zumindest einem der Ansprüche 1 bis 21, **dadurch gekennzeichnet,** daß zur Festlegung der Abreißsicherung zumindest ein Keil (100) verwendet ist.

# FIG1

EP 0 378 720 A1

FIG 2

FIG 3

FIG 4

FIG 5

FIG 6

FIG 7

FIG 8

**FIG 9**

**FIG 10**

**FIG 11**

**FIG 12**

**FIG 13**

FIG 14

FIG 15

FIG 16

FIG 17

FIG 18

FIG 19

FIG 20

FIG 21

FIG 22 FIG 23 FIG 24

FIG 25 FIG 26

EP 0 378 720 A1

FIG 27

FIG 28

FIG 29

FIG 30

**FIG 31**

**FIG 33**

**FIG 32**

**FIG 34**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 132 634 (SIEMENS AG) <br> * Figuren 1-3; Seite 5, Zeilen 8-27 * <br><br> --- | 1,4,6,7 ,12,18, 22 | H 01 G 1/11 |
| A | FR-A-2 428 310 (SIEMENS AG) <br> & DE-A-2 825 377 <br> ----- | | |

**RECHERCHIERTE SACHGEBIETE (Int. Cl.5)**

H 01 G

Der vorliegende Recherchenbericht wurde für alle Patentansprüche erstellt

| Recherchenort | Abschlußdatum der Recherche | Prüfer |
|---|---|---|
| DEN HAAG | 13-09-1989 | MOMENE Y ARROYO M.E. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument